# EUROPÄISCHE PATENTANMELDUNG

(11) **EP 0 841 765 A2**
(43) Veröffentlichungstag der Anmeldung: **13.05.1998**
(21) Anmeldenummer: 97117625.0
(22) Anmeldetag: 11.10.1997
(51) Int. Cl.: H04H 1/00

(54) **Verfahren zur Bestimmung von Senderstandorten beim digitalen Rundfunk**

(30) Priorität: 06.11.1996 DE 19645707; 23.04.1997 DE 19717013
(71) Anmelder: ROBERT BOSCH GMBH, 70442 Stuttgart (DE)
(72) Erfinder: Lauterbach, Thomas, Dr., 31139 Hildesheim (DE); Schneiders, Peter, 31141 (DE)

(57) **Zusammenfassung**

Es wird ein Verfahren zur Bestimmung von Senderstandorten aus dem Nullsymbol eines im digitalen Rundfunkt übertragenen Datenrahmens vorgeschlagen, das es auf einfache Art ermöglicht, durch Vergleich des Energiegehalts aller möglichen Frequenzkämme die empfangenen Frequenzkämme und deren Frequenzmuster zu bestimmen.

## Beschreibung

### Stand der Technik

Die Erfindung geht aus von einem Verfahren zur Bestimmung von Senderstandorten nach der Gattung des Hauptanspruchs.

Aus dem europäischen Standard ETS 300401 (1994), Seite 174 bis 176 ist bekannt, daß im Rahmen der Übertragung von digitalen Rundfunksignalen eine Senderkennung ausgestrahlt werden kann. Dazu wird, anstelle des reinen Nullsymbols in einem Datenrahmen des digitalen Runkfunksignals (Digital Audio Broadcasting DAB), eine senderspezifische Kennung eingebaut, die als Transmitter Identification Information (TII) bezeichnet wird.

Zur Erzeugung des TII-Signals werden zwei Konstanten verwendet, die Frequenzkammnummer c und das Frequenzkammmuster p. Diese beiden Konstanten erlauben eine eindeutige Zuordnung eines Senders zu einem Ort. Das mit diesen Konstanten modulierte Signal besteht aus einzelnen Frequenzkämmen, mit jeweils ausgetasteten und nichtausgetasteten Frequenzträgerpaaren. Um den Standort eines Senders aus einem empfangenen Signal berechnen zu können, müssen die beiden konstanten Parameter c und p aus dem empfangenen Signal extrahiert werden. Bisher erfolgt die Ermittlung der Parameter durch rechenintensive Kreuzkorrelation aller möglichen Frequenzkammmuster.

### Vorteile der Erfindung

Das erfindungsgemäße Verfahren mit den kennzeichnenden Merkmalen des Hauptanspruchs ist ein Verfahren zur Ermittlung der Parameter p und c des übertragenen TII-Signals. Als Vorteil ist anzusehen, daß bei einer Analyse des TII-Frequenzkammes eines übertragenen DAB-Datenrahmens ein einfacher Vergleich des Energiegehaltes aller Frequenzkämme, die nach dem bekannten Standard möglich sind, durchgeführt wird und so die Nummer des Frequenzkamms ermittelt wird.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß durch die symmetrische Struktur des Frequenzkammes im Transmission Mode I eine Aufteilung in vier gleiche Frequenzbereiche möglich ist. Der Vergleich der Energieinhalte wird für die vier gleichen Frequenzbereiche getrennt durchgeführt. In jedem der vier Bereiche liegt der Frequenzkamm in gleicher Form vor. Daher muß eine Bestimmung des Energieinhaltes in allen, oder doch zumindest in drei Frequenzbereichen zu einem gleichen Ergebnis führen. Durch den Vergleich der einzelnen Bereiche erhält man in vorteilhafter Weise mit hoher Wahrscheinlichkeit die Frequenzkämme, die unter den n Frequenzkämmen mit größtem Energieinhalt liegen.

Weiterhin ist es von Vorteil, daß n voreinstellbar ist und der Anzahl der an einem beliebigen Ort zu empfangenden Sendern entspricht.

Vorteilhafterweise macht man sich zur Bestimmung des Energieinhalts des Frequenzkamms das Parsevalsche Theorem zunutze, und bestimmt das Betragsquadrat der Trägeramplituden des Nullsymbols.

Es ist von Vorteil, wenn im Transmission Mode Iund IV auch zur Ermittlung des Frequenzkammusters der gesamte Frequenzbereich in vier gleiche Bereiche unterteilt wird. In diesen Bereichen werden die ausgetasteten und nicht ausgetasteten Frequenzen des Frequenzkamms mit den bereits bekannten Nummern c bestimmt und als Vektor mit einem Index von Null bis Sieben dargestellt. Vorteilhafter Weise wird auch bei der Bestimmung des Frequenzkammmusters p ein Wahrscheinlichkeitsvergleich durchgeführt, nach dem mindestens in drei Frequenzbereichen ein äquivalenter Indexvektor für das Frequenzkammmuster vorliegen muß.

Ist ein Vektor mit hoher Wahrscheinlichkeit bestimmt worden, wird das durch den Vektor erzeugte Muster mit der Liste aller nach dem Standard möglichen Muster verglichen und der Parameter p festgelegt.

Vorteilhafterweise ist es möglich, für die Bestimmung des Frequenzkammmusters die Energieinhalte der beiden ausgetasteten Frequenzen, die nach dem Standard ein Trägerpaar des Frequenzkamms bilden, zu addieren. Dadurch ist eine bessere und eindeutigere Unterscheidung über ein- oder ausgetastete Trägerpaare möglich.

Aus den bestimmten Parametern des Frequenzkammes ist eine eindeutige Zuordnung zu der Position des Senders vorgegeben.

### Zeichnung

Ein Ausführungsbeispiel der Erfindung ist in den Zeichnungen dargestellt und in der nachfolgenden Beschreibung näher erläutert. Es zeigt die Figur 1 den Rahmenaufbau eines DAB-Rahmens, Figur 2 das Energiedichte-Spektrum eines TII-Signals, Figur 3 ein Schema der Bestimmung der Frequenzkammnummer und Figur 4 ein Schema zur Bestimmung des Frequenzkammmusters.

### Beschreibung der Ausführungsbeispiele

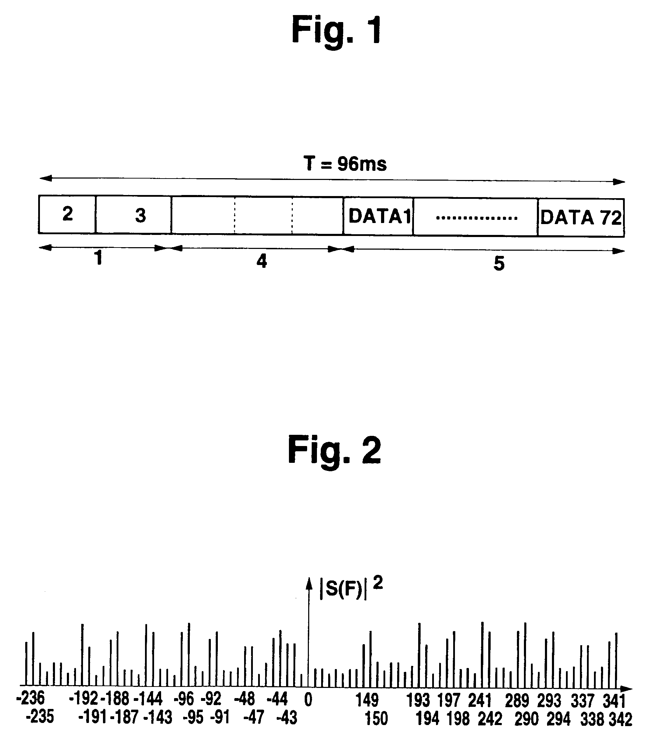

Bei DAB (Digital Audio Broadcasting) handelt es sich um ein Multifrequenzträger-Übertragungssystem mit hoher Bandbreite. Innerhalb dieses digitalen terestrischen Hörfunksystems kommt das Modulationsverfahren Orthogonal Frequency Division Multiplex (OFDM) zum Einsatz. Das damit erzeugte DAB-Signal besteht aus OFDM-Symbolen in einer Rahmenstruktur nach Fig. 1. Im DAB-Mode 1 hat ein Datenrahmen die Länge von 96 Millisekunden. Innerhalb des DAB-Datenrahmens wird zuerst der Synchronisationskanal 1 übertragen, in dem sich das Nullsymbol 2 sowie das Phasenreferenzsymbol (Time Frequency Phase Referenz TFPR-Symbol) befindet. Anschließend werden im Fast Information Channel FIC Informationen darüber übertragen, wo im Multiplex bestimmten Programmen und Diensten zugeordnete Daten zu finden sind und wie die jeweilige Kanalcodierung aussieht. Der Main Service Channel 5 wird auf den restlichen 72 OFDM-Symbole übertragen, die die eigentlichen Nutzdaten enthalten.

In jedem zweiten abgestrahlten DAB-Rahmen wird anstelle des Nullsymbols ein TII-Symbol übertragen. Dieses TII-Symbol enthält eine individuelle Kennung des DAB-Senders. Diese Kennung wird durch die Übertragung eines Frequenzmusters, eines Frequenzkamms realisiert, der aus Trägerpaaren besteht, die gemäß des ETS-Standards abgestrahlt werden. Die individuellen Senderkennungen werden mit Hilfe zweier Parameter der Frequenzkammnummer c und dem Frequenzkammmuster p, erzeugt. Über die Frequenzkammnummer c ergeben sich 24 mögliche Frequenzkämme. Im Transmissionsmode 1 werden 1.536 modulierte Träger verwendet. Durch die Art der Erzeugung des Frequenzkammes wird die Anzahl der TII-Signale in den vier gleichen Frequenzbereichen auf jeweils 8 Trägerpaare beschränkt. Zusätzlich wird über 70 mögliche Frequenzkammmuster p festgelegt, ob ein Trägerpaar in einem Frequenzkamm übertragen wird oder nicht.

Da das DAB-System in der Lage ist, Echos des ursprünglichen Signals zu verarbeiten, ist es möglich, das DAB-Sendernetz als sog. Gleichwellennetz zu betreiben. Dies bedeutet, daß alle Sender in einem Versorgungsbereich ein Programm auf derselben Sendefrequenz abstrahlen. Durch Anwendung des Gleichwellennetzbetriebs entsteht so, durch die geringen Abstände der Sender zueinander, ein überlagertes DAB-Empfangssignal aus unterschiedlichen Sendesignalen. Aus diesem überlagerten DAB-Signal bzw. dem darin übertragenen TII-Symbol müssen die an der Überlagerung beteiligten Sender herausgefunden werden. Mit der Kenntnis der empfangenen Sender ist es möglich, den Standort des Empfängers im Verhaältnis zum Sender zu ermitteln. Figur 2 zeigt einen Ausschnitt aus dem Energiedichtespektrum eines TII-Signals zweier empfangener Sender A (c=0, p=0) und B (c=2, p=2). Das empfangene TII-Symbol wird zunächst abgetastet. Das Signal wird auf die Dauer von 2048 Abtastwerten zeitbegrenzt. Dieses zeitbegrenzte, zeitdiskrete Signal, das im Empfänger vorliegt, wird anschließend mit einer schnellen Fourriertransformation in den Frequenzbereich übertragen. Nach der Transformation führt man den sog. "fft-shift" durch, um das fouriertransformierte, berechnete Frequenzspektrum in das Basisband zu verschieben. Nach Verschiebung des transformierten Ergebnisses in das Basisband und der Unterdrückung der im DAB-Verfahren nicht übertragenen virtuellen Träger, repräsentiert das Ergebnis ein komplexes Spektrum im Frequenzbereich von -768 bis 768 kHz. Anstatt eine aufwendige Berechnung der Korrelationsfunktion für jeden möglichen Frequenzkamm durchzuführen, kann durch Anwendung des Parseval'schen Theorem die gesamte Information über empfangene Frequenzkämme aus dem Energiedichtespektrum gewonnen werden. Dazu bildet man für die komplexen trägeramplituden das Betragsquadrat und erhält das frequenzdiskrete Energiedichtespektrum eines zeitdiskreten TII-Signals. Entsprechend ist die Energie eines solchen Signals gleich der Summe der einzelnen Spektralanteile. Da jeder Sender seinen eigenen Frequenzkamm abstrahlt und diese unterschiedlichen Trägerpaare benutzt, ist durch Aufsummieren der entsprechenden Betragsquadrate eine Aussage über den Energiegehalt eines Frequenzkammes möglich.

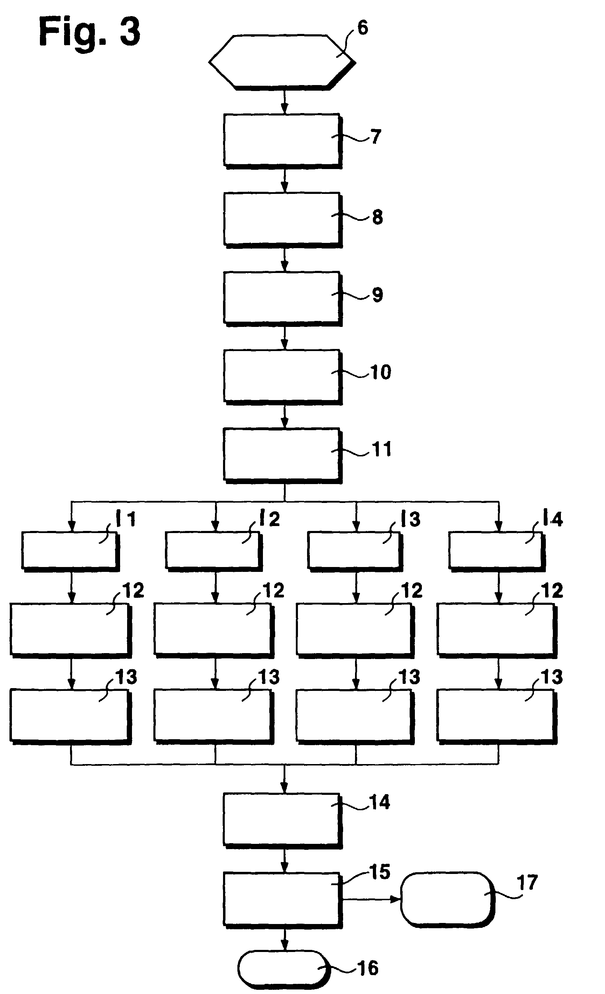

Figur 3 zeigt den Ablauf zur Bestimmung der Frequenzkammnummer c. Zur Frequenzkammbestimmung 6 werden zunächst über die schnelle Fouriertransformation FFT aus dem abgetasteten Zeitsignal, das aus Inphase- und Quadraturkomponente besteht, die komplexen Trägeramplituden bestimmt 7. Im nächsten Schritt 8 werden die nicht modulierten Träger ausgeblendet und das Frequenzspektrum ins Basisband verschoben. Zur besseren datentechnischen Verarbeitung erzeugt man einen Vektor von Null bis 1536 komplexen Abtastwerten 9. Anschließend werden die Betragsquadrate für die komplexen Trägeramplituden 10 gebildet. Zur Ermittlung des Energieinhaltes eines Frequenzkammes z.B. im Transmissions Mode I wird das Energiedichtespektrum, das jetzt vorliegt, in vier Frequenzintervalle aufgeteilt. Intervall 1: Untertäger 0 bis 383, Intervall 2: Unterträger 384 bis 767, Intervall 3: Unterträger 769 bis 1152 und Intervall 4 von 1153 bis 1535. Ein Frequenzkamm besitzt innerhalb eines Frequenzintervalls acht symmetrisch angeordnete Trägerpaare, deren Zuordnung über die entsprechenden Frequenzkammnummern möglich ist. Durch gezieltes Auslesen und Aufsummieren der Betragsquadrate, begrenzt auf ein Frequenzintervall, ermittelt man im Schritt 12 die Energie für alle 24 möglichen Frequenzkämme. Die Ergebnisse der Summation 12 werden im Schritt 13 nach der Größe ihres Inhaltes sortiert. Das Auslesen und der Vergleich der Inhalte der vier Intervalle ergibt die n Maximalwerte für diverse Frequenzkämme. Sind in einer Gegend vier Sendestandorte bekannt, wird die Zahl n auf vier begrenzt. Die Entscheidung, ob ein Frequenzkamm empfangen wurde oder ob es sich um einen starken Störsender handelt, ist durch Auswertung aller vier Frequenzintervalle möglich. Als hinreichend für die Existenz eines Frequenzkammes ist die Bedingung, daß sein Energiegehaltin unserem Beispiel mindestens in drei Frequenzintervallen unter den n größten Energiewerten 15 liegt. Das Ergebnis der Frequenzkammbestimmung mit zum Beispiel vier empfangenen Frequenzkämmen kann ausgegeben werden 16 und muß für die Musterbestimmung 17 weiterverarbeitet werden.

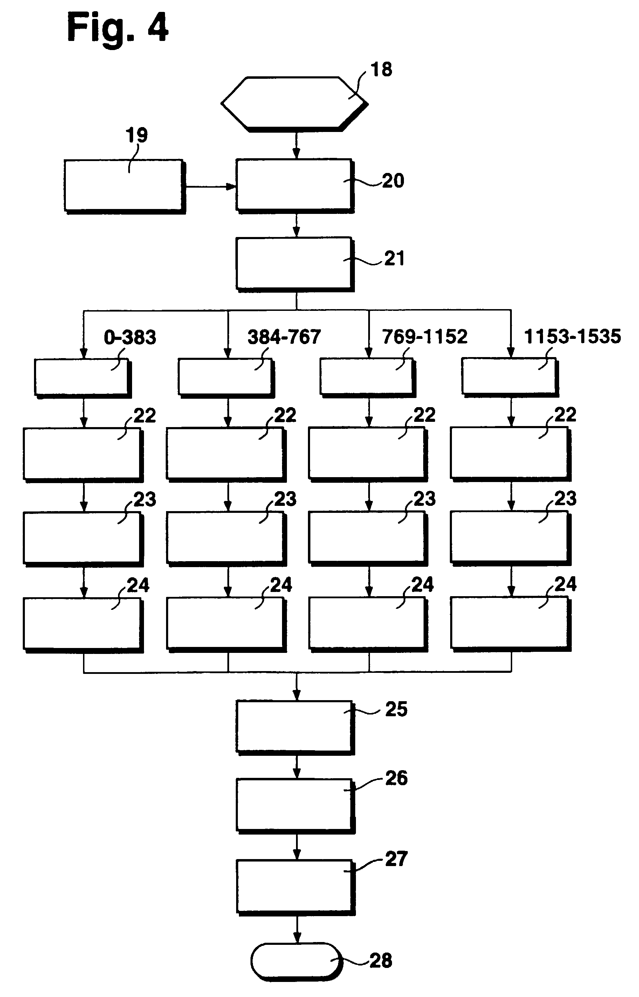

Figur 4 zeigt im weiteren Verlauf die Bestimmung des Frequenzkammmusters 18. Das Verfahren der Frequenzkammbestimmung 19 liefert die Information über die empfangenen Frequenzkämme. Für jeden der empfangenen Frequenzkämme muß das zugehörige Muster gesucht und bestimmt werden. Zunächst werden die empfangenen Frequenzkämme, beispielsweise die vier Frequenzkämme der vier möglichen Sender eingelesen 20. Das Frequenzspektrum dieser vier Kämme wird ebenfalls in die bereits bekannten vier Frequenzintervalle aufgeteilt 21. Da die Trägerfrequenzen für die Trägerpaare bekannt sind, können aus dem Energiedichtespektrum des zu untersuchenden Frequenzkamms die Spektralanteile einzelner Träger ausgelesen werden. Zur besseren und eindeutigen Unterscheidung über ein vorhandenes oder nicht vorhandenes Trägerpaar (ein- oder ausgetastet) werden die Spektralanteile der beiden Träger eines Trägerpaares addiert 22. Gemäß der Spezifikation besitzt ein Frequenzkamm pro Frequenzintervall 8 Trägerpaare, von denen durch die Kodierung des Frequenzkamms ein Muster von vier Trägerpaaren erzeugt wird. Die vier größten Spektralanteile von Trägerpaaren innerhalb eines Frequenzintervalls werden im Schritt 23 bestimmt und mit einem Index versehen, der von 0 bis 7 läuft. Anschließend werden die erhaltenen Indizes nach der Größe ihres Inhaltes 24 sortiert. Die Trägerpaarindizes der vier verschiedenen Intervallvektoren werden miteinander verglichen. Sind mindestens in drei Intervallen die Indexzahlen vertreten, so ist dies für die Annahme hinreichend, daß das Trägerpaar, daß sich hinter diesem Index verbirgt, eingetastet ist 25. Aus dem Wissen über die eingetasteten Trägerpaare läßt sich ein achtstelliges Muster 26 erstellen, indem man für die eingetasteten Trägerpaare entsprechend ihrem Index eine 1 und für ausgetastete Trägerpaare eine 0 setzt. Dieses entstandene Muster, zum Beispiel ein Muster mit 00100111 wird mit 70 tabellarisch abgespeicherten Kombinationen verglichen 27 und daraus die Musternummer p bestimmt. Über die Ausgabe 28 ist die Musternummer auszugeben. Damit ist eine eindeutige Bestimmung der Frquenzkammparameter für die n zu empfangenen Sender erfolgt. Aus der geografischen Lage der Sender läßt der Empfängerstandort ermitteln.

## Patentansprüche

1. Verfahren zur Bestimmung von Senderstandorten aus den in einem Nullsymbol eines Datenrahmens des digitalen Rundfunks übertragenen Sendererkennungs-Frequenzkämmen (TII) durch Ermitteln einer Frequenzkammnummer (c) und eines Frequenzkammmusters (p), dadurch gekennzeichnet, daß durch Vergleich des Energiegehalts aller möglichen Frequenzkämme die empfangenen Frequenzkämme (c) bestimmt werden, und daß durch Vergleich mit allen möglichen Frequenzkammustern die empfangenen Frequenzkammuster (p) festgelegt werden.

2. Verfahren zur Bestimmung von Senderstandorten nach Anspruch 1, dadurch gekennzeichnet, daß der Energieinhalt eines Frequenzkammes durch Bildung der Summe der Betragsquadate oder der Beträge der dem Frequenzkamm zugehörigen Trägeramplituden des Nullsymbols ermittelt wird.

3. Verfahren zur Bestimmung von Senderstandorten nach Anspruch 1 oder 2, dadurch gekennzeichnet, daß zum Vergleich der Energieinhalte das Nullsymbol in M gleiche Frequenzbereiche aufgeteilt wird, und das Vorliegen eines empfangenen Frequenzkamms bestätigt ist, wenn in mindestens N (N>M) Frequenzbereichen der Frequenzkamm unter den n mit größten Energieinhalten liegt.

4. Verfahren zur Bestimmung von Senderstandorten nach Anspruch 1 bis 3, dadurch gekennzeichnet, daß n die Anzahl der an einem Ort empfangbaren Sender ist.

5. Verfahren zur Bestimmung von Senderstandorten nach Anspruch 1 bis 4, dadurch gekennzeichnet, daß zur Ermittlung des Frequenzkammmusters die in einem empfangenen Frequenzkamm ausgetasteten und nicht ausgetasteten Frequenzen als Vektor mit Index 0 bis K dargestellt werden.

6. Verfahren zur Bestimmung von Senderstandorten nach Anspruch 1 bis 5, dadurch gekennzeichnet, daß ein Vektor als wahrscheinlich erkannt wird, wenn er in mindestens 3 der Frequenzbereichen auftritt.

7. Verfahren zur Bestimmung von Senderstandorten nach Anspruch 1 bis 6, dadurch gekennzeichnet, daß aus einem Vektor hoher Übertragungs-Wahrscheinlichkeit ein Muster bestimmt und mit allen möglichen Mustern verglichen wird.

8. Verfahren zur Bestimmung von Senderstandorten nach Anspruch 1 bis 7, dadurch gekennzeichnet, daß die Energieinhalte der beiden Frequenzen eines Trägerpaares im Frequenzkamm addiert werden.

9. Verfahren zur Bestimmung von Senderstandorten nach Anspruch 1 bis 8, dadurch gekennzeichnet, daß aus Frquenzkammnummer und Frequenzkammmuster anhand einer Liste die Position des Senders bestimmt wird.

10. Verfahren zur Bestimmung von Senderstandorten nach Anspruch 1 bis 9, dadurch gekennzeichnet, daß zur Bestimmung des Energieinhalts des Frequenzkammes mindestens ein Nullsymbol ausgewertet wird.
